# EUROPEAN PATENT SPECIFICATION

(11) **EP 2 267 829 B1**
(45) Date of publication and mention of the grant of the patent: **17.10.2012**
(21) Application number: 10166430.8
(22) Date of filing: 18.06.2010
(51) Int. Cl.: H01M 8/24, H01M 8/02

(54) **Fuel cell system and stack thereof**
Brennstoffzellensystem und Stapel daraus
Système de piles à combustible et empilement correspondant

(30) Priority: 25.06.2009 KR 20090057233
(43) Date of publication of application: 29.12.2010
(73) Proprietor: Samsung SDI Co., Ltd., Suwon-si, Gyeonggi-do 443-731 (KR)
(72) Inventor: An, Seong-Jin, 443-731, Gyeonggi-do (KR); Lee, Chi-Seung, 443-731, Gyeonggi-do (KR); Park, Jun-Young, 443-731, Gyeonggi-do (KR); Lee, Jin-Hwa, 443-731, Gyeonggi-do (KR); Suh, Jun-Won, 443-731, Gyeonggi-do (KR)
(74) Representative: Gulde Hengelhaupt Ziebig & Schneider

(56) References cited:
- EP-A2- 0 959 511
- WO-A2-02/069430
- JP-A- 8 167 424
- US-B1- 6 387 558

## Description

### BACKGROUND

### 1. Field

The following description relates to a fuel cell system with a fuel inlet and a fuel outlet that are formed on the same side of a stack of unit cells.

### 2. Description of the Related Art

A fuel cell system, for example, a polymer electrolyte membrane fuel cell (PEMFC) system uses a polymer electrolyte member having a hydrogen ion exchange capability. Here, the PEMFC system selectively transmits hydrogen generated by reforming a hydrocarbon-based fuel such as methanol or natural gas and oxygen derived from an oxidizing agent, e.g. from the air, to the polymer electrolyte member to generate power and heat through electrochemical reaction between the hydrogen and the oxygen. The fuel cell system includes a stack formed by stacking a plurality of unit cells that substantially produce power and heat.

Each unit cell in the stack includes a membrane electrode assembly (MEA) that is composed of an anode, a cathode, a polymer electrolyte membrane between the anode and cathode, and a separator having a fuel path and an oxidizing agent path. A fuel containing hydrogen is supplied to the anode through the fuel path, and oxidizing agent containing oxygen is supplied to the cathode through the oxidizing agent path. The separators form the fuel path and the oxidizing agent path, and connect the anode of one MEA and a cathode of another MEA in series.

Therefore, the stack includes inlets and outlets for supplying the fuel and oxidizing agent and emitting unreacted fuel and oxidizing agent. That is, the fuel inlet and the fuel outlet form a fuel flow length there between, and the oxidizing agent inlet and the oxidizing agent outlet form an oxidizing agent flow length there between.

When the inlets and the outlets are respectively formed at different sides of the stack, the respective unit cells have the same fuel flow lengths and the same oxidizing agent flow lengths.

However, in the case that the inlet and the outlet are formed in the same side of the stack in order to increase spatial utility of the stack, fuel flow lengths of the respective unit cells are different from each other and oxidizing agent flow lengths of the respective unit cells are also different from each other. Accordingly, the supply of fuel and oxidizing agent to the unit cells is not uniform. Such a fuel cell system is disclosed e.g. in EP 0 959 511 A2.

The above information disclosed in this Background section is only for enhancement of understanding of the background of the invention and therefore it may contain information that does not form the prior art that is already known in this country to a person of ordinary skill in the art.

### SUMMARY

Aspects embodiments of the present invention are directed toward a fuel cell system and a stack that is capable of allowing the fuel supplied to each unit cell uniform by equalizing the fuel flow length of each unit cell in the case that a fuel inlet and a fuel outlet are formed in the same side of a stack.

Aspects of the present invention are directed toward a fuel cell system and a stack that makes the fuel and oxidizing agent supply to each unit cell uniform by equalizing the length of the fuel path and the oxidizing agent path to each unit cell in the case that a fuel inlet and a fuel outlet are formed in the same side of a stack.

For the purpose of the present invention the term "oxidizing agent" denotes any agent suitable to provide oxygen to the fuel cell system in order to allow for power generation. Preferably, the oxidizing agent may be provided in form of an oxygen containing gas, e.g. in form of air.

According to the present invention, it is provided a fuel cell system as defined in the claims. The fuel cell system includes: a fuel supply configured to supply a fuel containing hydrogen; an oxidizing agent supply configured to supply oxidizing agent containing oxygen; and a stack configured to generate power and heat through an electrochemical reaction of the hydrogen and the oxygen.

The stack includes: a plurality of unit cells stacked together, and each unit cell of the plurality of unit cells includes separators and a membrane assembly (MEA) disposed between the separators; a fuel inlet coupled to the fuel supply at a first end of the stack, the fuel inlet configured to introduce the fuel to the plurality of the unit cells; an unreacted fuel outlet at the first end of the stack, the unreacted fuel outlet configured to emit unreacted fuel from the stack; a fuel bypass path coupled to the fuel inlet, the fuel bypass path configured to bypass the fuel from the first end of the stack to be at a second end of the stack; a fuel distribution path coupled to the fuel bypass path at the second end of the stack and configured to distribute the fuel to the plurality of unit cells; and an unreacted fuel discharging path coupled between the fuel distribution path and the unreacted fuel outlet, the unreacted fuel path configured to channel the unreacted fuel to the unreacted fuel outlet.

The fuel bypass path is formed by a connection of fuel bypass holes in a portion of the separators that extends past the MEA.

The fuel distribution path is formed by a connection of fuel supply holes in a portion of the separators that extends past the MEA, and the fuel supply holes are coupled to a first side of fuel paths of the separators.

The unreacted fuel discharging path is formed by a connection of fuel outlet holes in the portion of the separators that extends past the MEA, and the fuel outlet holes are coupled to a second side of the fuel paths of the separators.

The fuel bypass path and the fuel distribution path are coupled together through a first communication groove in at least one of an end plate, an insulator, a current collecting plate, and a separator in the an outermost unit cell of the plurality of unit cells at the second end of the stack.

The stack further includes: an oxidizing agent inlet configured to introduce oxidizing agent to the plurality of unit cells from the oxidizing agent supply; an unreacted oxidizing agent outlet located at a side of the stack opposite to a side of the stack where the oxidizing agent inlet is located; and a reaction cooling oxidizing agent path extending between the oxidizing agent inlet and the unreacted oxidizing agent outlet, the reaction cooling oxidizing agent path configured to distribute the unreacted oxidizing agent to the unit cells and form oxidizing agent paths for heat dissipation.

The reaction cooling oxidizing agent path is formed to extend in a direction crossing the extension direction of the fuel bypass path.

The reaction cooling oxidizing agent path is on a side of a corresponding separator of the separators opposite to a side of the corresponding separator disposed thereon by a fuel path.

A first separator of the separators of each unit cell includes a fuel path adjacent to one side of the MEA, and a second separator of the separators includes the reaction cooling oxidizing agent path adjacent to another side of the MEA.

According to another embodiment of the present invention, a fuel cell system includes: a fuel supply configured to supply a fuel containing hydrogen; an oxidizing agent supply configured to supply oxidizing agent containing oxygen; and a stack configured to generate power and heat through an electrochemical reaction of the hydrogen and the oxygen, wherein the stack includes: a plurality of unit cells stacked together, and each of the plurality of unit cells includes separators and a membrane assembly (MEA) disposed between the separators; a fuel inlet coupled to the fuel supply, the fuel inlet configured to introduce the fuel to the plurality of unit cells; an unreacted fuel outlet at the first end of the stack, the unreacted fuel outlet configured to emit unreacted fuel from the stack; an oxidizing agent inlet coupled to the oxidizing agent supply, the oxidizing agent inlet configured to introduce the oxidizing agent from the oxidizing agent supply to the plurality of unit cells; and an unreacted oxidizing agent outlet configured to emit unreacted oxidizing agent from the stack, wherein the fuel inlet, the unreacted fuel outlet, the oxidizing agent inlet, and the unreacted oxidizing agent outlet are formed in at a first end of the stack; a fuel bypass path coupled to the fuel inlet, the fuel bypass path configured to bypass the fuel from the first end of the stack to be at a second end of the stack; a fuel distribution path coupled to the fuel bypass path at the second end of the stack, and configured to distribute the fuel to each of the plurality of unit cells; and an unreacted fuel discharging path coupled between the fuel distribution path and the unreacted fuel outlet, the unreacted fuel path configured to channel the unreacted fuel to the unreacted fuel outlet.

The stack further includes: an oxidizing agent bypass path coupled to the oxidizing agent inlet, the oxidizing agent bypass path configured to bypass the oxidizing agent from the first end of the stack to be at the second end of the stack; an oxidizing agent distribution path coupled to the oxidizing agent bypass path at the second end of the stack, the oxidizing agent distribution path configured to distribute oxidizing agent to each of the plurality unit cells; and an unreacted oxidizing agent discharging path coupled between the oxidizing agent distribution path and the unreacted oxidizing agent outlet, the unreacted oxidizing agent discharging path configured to channel the unreacted oxidizing agent to the unreacted oxidizing agent outlet.

The fuel bypass path includes a connection of fuel bypass holes in portions of the separators that extend past the MEA, and the oxidizing agent bypass path includes a connection of oxidizing agent bypass holes in portions of the separators that extend past the MEA.

The fuel distribution path is formed by a connection of fuel supply holes in a portion of the separators that extend past the MEA, and the fuel supply holes are coupled to a first side of fuel paths of the separators.

The unreacted fuel discharging path is formed by a connection of fuel outlet holes in the portion of the separators that extends past the MEA, and the fuel outlet holes are coupled to a second side of the fuel paths of the separators.

The oxidizing agent distribution path is formed by a connection of oxidizing agent supply holes in a portion of the separators that extends past the MEA, and the oxidizing agent supply holes are coupled to a first side of oxidizing agent paths in the separators.

The unreacted oxidizing agent discharging path is formed by a connection of oxidizing agent outlet holes in the portion of the separators that extends past the MEA, and the oxidizing agent outlet holes are coupled to a second side of the oxidizing agent paths in the separators.

The oxidizing agent bypass path and the oxidizing agent distribution path are coupled together through a second communication groove formed in at least one of an end plate, an insulator, a current collecting plate, and a separator in an outermost unit cell of the plurality of unit cells at the second end of the stack.

According to another embodiment of the present invention, a fuel cell system includes: a plurality of unit cells stacked together, each of the plurality of unit cells including separators and a membrane assembly (MEA) disposed between the separators; a fuel inlet coupled to a first end of the stack and configured to introduce a fuel containing hydrogen to the unit cells; an unreacted fuel outlet coupled to the first end of the stack and configured to emit unreacted fuel from the unit cells; a fuel bypass path coupled to the fuel inlet, the fuel bypass path configured to bypass the fuel from the first end of the stack to be at a second end of the stack; a fuel distribution path coupled to the fuel bypass path at the second end of the stack and configured to distribute the fuel to the plurality of unit cells; and an unreacted fuel discharging path coupled between the fuel distribution path and the unreacted fuel outlet, the unreacted fuel path configured to channel the unreacted fuel to the unreacted fuel outlet.

The fuel bypass path includes a connection of fuel bypass holes in a portion of the separators that extends past the MEA.

The fuel distribution path includes a connection of fuel supply holes in a portion of the separators that extends past the MEA, and the fuel supply holes are coupled to a first side of fuel paths of the separators.

The unreacted fuel discharging path is formed by a connection of fuel outlet holes in the portion of the separators that extends past the MEA, and the fuel outlet holes are coupled to a second side of the fuel paths of the separators.

The fuel bypass path and the fuel distribution path are coupled together through a first communication groove in at least one of an end plate, an insulator, a current collecting plate, and a separator in the an outermost unit cell of the plurality of unit cells at the second end of the stack.

The stack further includes: an oxidizing agent inlet configured to introduce oxidizing agent to the plurality of unit cells from the oxidizing agent supply; an unreacted oxidizing agent outlet located at a side of the stack opposite to a side of the stack where the oxidizing agent inlet is located; and a reaction cooling oxidizing agent path extending between the oxidizing agent inlet and the unreacted oxidizing agent outlet, the reaction cooling oxidizing agent path configured to distribute the unreacted oxidizing agent to the unit cells and form oxidizing agent paths for heat dissipation.

According to another embodiment of the present invention, a fuel cell system includes: a stack configured to generate power and heat through an electrochemical reaction of the hydrogen and the oxygen, the stack including: a plurality of unit cells stacked together, and each of the plurality of unit cells includes separators and a membrane assembly (MEA) disposed between the separators; a fuel inlet coupled to the fuel supply, the fuel inlet configured to introduce a fuel to the plurality of unit cells; an unreacted fuel outlet at the first end of the stack, the unreacted fuel outlet configured to emit unreacted fuel from the stack; an oxidizing agent inlet coupled to the oxidizing agent supply, the oxidizing agent inlet configured to transfer oxidizing agent from the oxidizing agent supply to the unit cells; and an unreacted oxidizing agent outlet configured to emit unreacted oxidizing agent from the stack, wherein the fuel inlet, the unreacted fuel outlet, the oxidizing agent inlet, and the unreacted oxidizing agent outlet are formed at a first end of the stack; a fuel bypass path coupled to the fuel inlet, the fuel bypass path configured to bypass the fuel from the first end of the stack to be at a second end of the stack; a fuel distribution path coupled to the fuel bypass path at the second end of the stack, and configured to distribute the fuel to each of the plurality of unit cells; and an unreacted fuel discharging path coupled to the fuel distribution path and the unreacted fuel outlet, the unreacted fuel discharging path configured to channel the unreacted fuel to the unreacted fuel outlet.

The fuel cell system may further include: an oxidizing agent bypass path coupled to the oxidizing agent inlet, the oxidizing agent bypass path configured to bypass the oxidizing agent from the first end of the stack to be at the second end of the stack; an oxidizing agent distribution path coupled to the oxidizing agent bypass path at the second end of the stack, the oxidizing agent distribution path configured to distribute oxidizing agent to each of the plurality of unit cells; and an unreacted oxidizing agent discharging path coupled between the oxidizing agent distribution path and the unreacted oxidizing agent outlet, the unreacted oxidizing agent discharging path configured to channel the unreacted oxidizing agent to the unreacted oxidizing agent outlet.

The fuel bypass path may further include a connection of fuel bypass holes in portions of the separators that extend past the MEA and the oxidizing agent bypass path includes a connection of oxidizing agent bypass holes in portions of the separators that extend past the MEA.

The fuel distribution path is formed by a connection of fuel supply holes in a portion of the separators that extends past the MEA, the fuel supply holes are coupled to a first side of fuel paths of the separators, the unreacted fuel discharging path is formed by a connection of fuel outlet holes in the portion of the separators that extends past the MEA, and the fuel outlet holes are coupled to a second side of the fuel paths of the separators.

The oxidizing agent distribution path is formed by a connection of oxidizing agent supply holes in a portion of the separators that extends past the MEA, the oxidizing agent supply holes are coupled to a first side of oxidizing agent paths of the separators, the unreacted oxidizing agent discharging path is formed by a connection of oxidizing agent outlet holes in the portion of the separators that extends past the MEA, and the oxidizing agent outlet holes are coupled to a second side of the oxidizing agent paths in the separators.

The oxidizing agent bypass path and the oxidizing agent distribution path are coupled through a second communication groove formed in at least one of an end plate, an insulator, a current collecting plate, and a separator in an outermost unit cell of the plurality of unit cells at the second end of the stack.

According to exemplary embodiments of the present invention, fuel that is bypass-supplied through the fuel bypass path can be distributed to the respective unit cells through the fuel distribution path, and unreacted fuel is induced through the unreacted fuel discharging path and can be emitted from the respective unit cells so that the fuel flow lengths of the respective unit cells can be equal to each other even though the fuel inlet and the unreacted fuel outlet are formed in the same side of the stack. Therefore, the fuel supply amount supplied to the respective unit cells can be uniform.

These and other features, aspects, and embodiments are described below in the section entitled "Detailed Description."

### BRIEF DESCRIPTION OF THE DRAWINGS

The above and other aspects and features of the embodiments according to the present invention will be more clearly understood from the following detailed description taken in conjunction with the accompanying drawings, in which:
FIG. 1 is a schematic diagram of a fuel cell system according to a first exemplary embodiment of the present invention.
FIG. 2 is a perspective view of a stack as shown in FIG. 1.
FIG. 3 is an exploded perspective view of a portion of a stack as shown in FIG. 2.
FIG. 4 is an exploded perspective view of a portion of a stack as shown in FIG. 2.
FIG. 5 is a top plan view of a separator of a unit cell as shown in FIG. 4, corresponding to the MEA.
FIG. 6 is an exploded perspective view of an end plate, an insulator, and a current collecting plate of a portion of a stack as shown in FIG. 2.
FIG. 7 shows a schematic diagram of a fuel cell system according to a second exemplary embodiment of the present invention.
FIG. 8 is a perspective view of a portion of a stack as shown in FIG. 7.
FIG. 9 is an exploded perspective view of a portion of a stack as shown in FIG. 8.
FIG. 10 is an exploded perspective view of a unit cell of a portion of a stack as shown in FIG. 8.
FIG. 11 is a top plan view of an anode-side separator of the unit cell as shown in FIG. 10, corresponding to the MEA.
FIG. 12 is a top plan view of a cathode-side separator of the unit cell as shown in FIG. 10, corresponding to the MEA.
FIG. 13 shows an exploded perspective view of an end plate, an insulator, and a current collecting plate of the stack as shown in FIG. 8.

### DETAILED DESCRIPTION

Hereinafter, with reference to the accompanying drawings, certain exemplary embodiments of the invention are shown. Like reference numerals designate like elements throughout the specification.

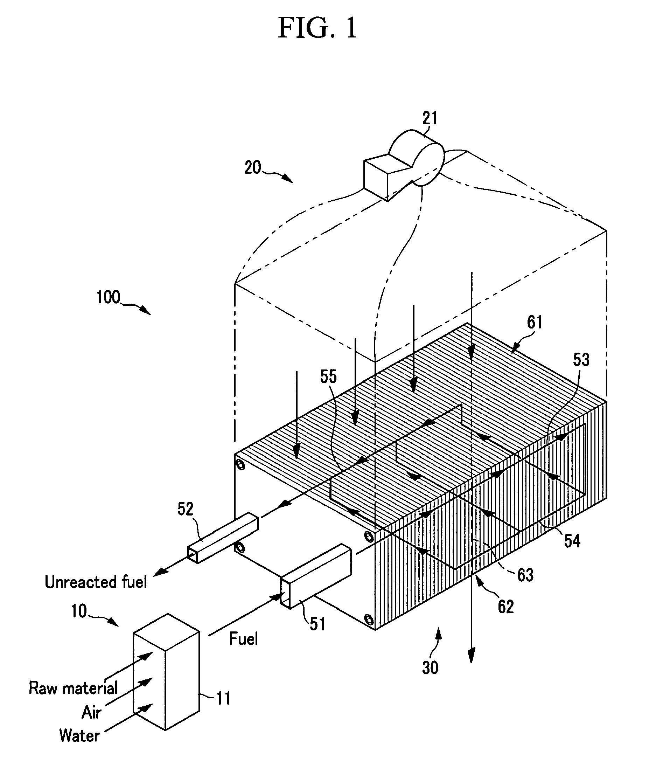

FIG. 1 is a schematic diagram of a fuel cell system according to a first exemplary embodiment of the present invention. Referring to FIG. 1, a fuel cell system (hereinafter referred to as a system) 100 includes a fuel supply 10 for supplying a fuel containing hydrogen, an oxidizing agent supply 20 for supplying oxidizing agent containing oxygen, and a stack 30 configured to generate power and heat through an electrochemical reaction between the hydrogen and the oxygen.

For example, the fuel supply 10 reforms a liquid fuel in a reformer 11 to generate hydrogen gas using a hydrogen containing liquid fuel such as methanol, ethanol, or natural gas supplied from a fuel tank by driving of a fuel pump, and then supplies the generated hydrogen gas to the stack 30.

The fuel supply 10 may supply the liquid fuel containing hydrogen directly to the stack 30, and in this case, the reformer 11 may be omitted. For convenience, the fuel supplied from the fuel supply 10 to the stack 30 is referred to as hydrogen gas. Therefore, the fuel supply 10 supplies e.g., hydrogen gas to the stack 30.

The oxidizing agent supply 20 supplies oxygen-containing oxidizing agent to the stack 30 by driving an oxidizing agent pump 21. The oxidizing agent supplied from the oxidizing agent supply 20 and the fuel supplied from the fuel supply 10 are independently supplied to the stack 30 and undergo an oxidation reaction and a reduction reaction while being circulated in the stack 30.

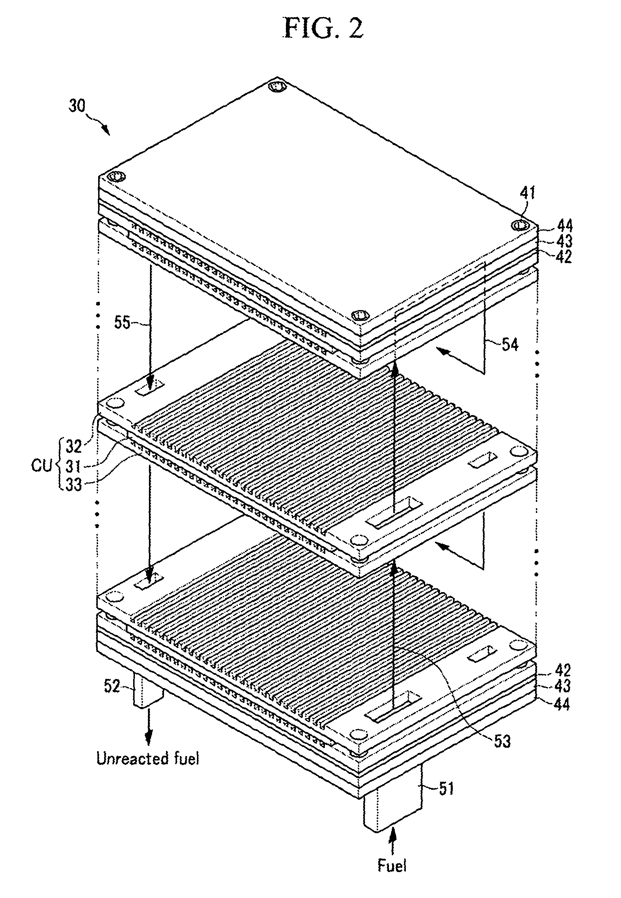

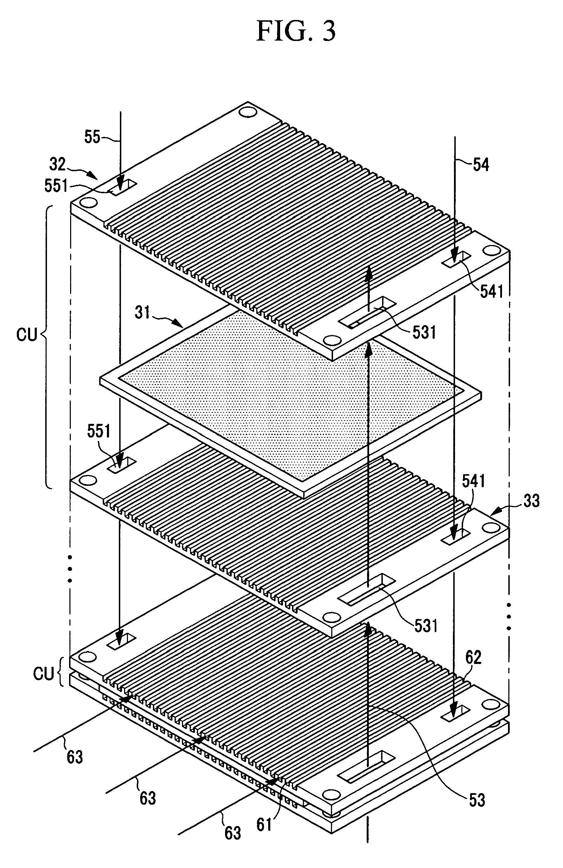

FIG. 2 is a perspective view of a portion of the stack of FIG. 1, and FIG. 3 is an exploded perspective view of a portion of the stack of FIG. 2. Referring to FIG. 1 and FIG. 2, the stack 30 may be formed by stacking a plurality of unit cells CU and fastening the outermost periphery thereof with a fastening member 41.

Each of the unit cells CU includes a membrane electrode assembly (MEA) 31, and anode-side and cathode-side separators 32 and 33 respectively disposed at both sides of the MEA 31, the separators allow the transfer of fuel and oxidizing agent from one side to the other side of the MEA 31. Here, the anode and the cathode are not specifically shown in the drawing. However, the anode-side separator 32 supplies a fuel to the anode of the MEA 31 and the cathode-side separator 33 supplies oxidizing agent to the cathode of the MEA 31. The cathode-side separator 33 and the anode-side separator 32 are disposed on opposite sides of the MEA 31.

The stack 30 is sequentially provided with a current collecting plate 42, an insulator 43, and an end plate 44 at an external side of the last or outermost unit cell in the unit cell stack provided at each side. The fastening member 41 fastens the unit cells CU, the current collecting plate 42, the insulator 43, and the end plate 44 together. In addition, the stack 30 is configured to take in the supplied fuel and oxidizing agent and to emit unreacted fuel and unreacted oxidizing agent after reaction for generation of power and heat.

For example, the stack 30 forms a fuel path in each of the unit cells CU with a fuel inlet 51, an unreacted fuel outlet 52, a fuel bypass path 53, a fuel distribution path 54, and an unreacted fuel discharging path 55, and forms an oxidizing agent path in each of the unit cells CU with an oxidizing agent inlet 61, an unreacted oxidizing agent outlet 62, and a reaction cooling oxidizing agent path 63 (refer to FIG. 1).

The fuel inlet 51 is coupled to the fuel supply 10 for inflow of the fuel to the unit cells CU in the stack 30. The unreacted fuel outlet 52 is coupled to the same side of the stack as the fuel inlet 51 and is configured to emit the unreacted fuel from the unit cells CU in the stack 30.

That is, the fuel inlet 51 and the unreacted fuel outlet 52 are coupled to the end plate 44 at one side (e.g., a low portion of the stack of FIG. 2) of the stack 30 for inflow of the fuel to the unit cells CU and emission of the unreacted fuel from the unit cells CU. Therefore, a pipe arrangement structure externally coupled to the stack 30 can be simple.

Furthermore, in the case that the fuel inlet 51 and the unreacted fuel outlet 52 are formed at the end plate 44 at the same side of the stack 30, the fuel bypass path 53, the fuel distribution path 54, and the unreacted fuel discharging path 55 can have a structure that equalizes the length of the fuel path formed at each of the unit cells CU to make the fuel supply amount in each of the unit cells CU uniform.

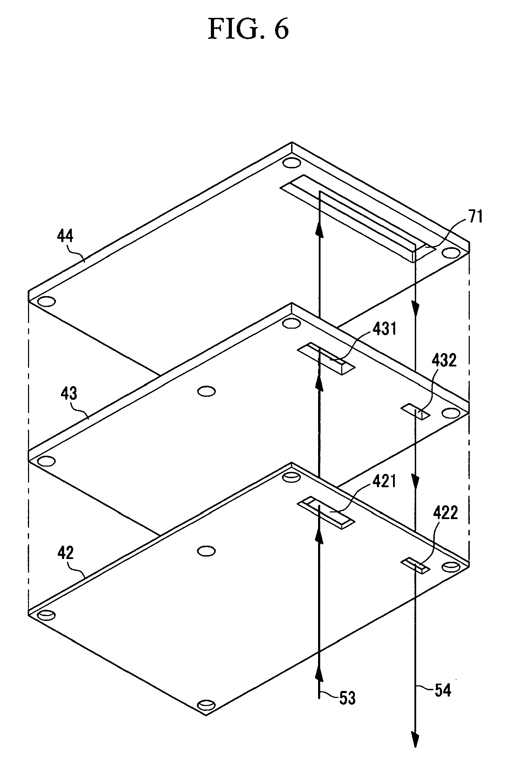

Referring back to FIG. 1 and FIG. 3, the fuel bypass path 53 extends at a end of the stack 30 from the fuel inlet 51 of the stack 30 to bypass the fuel to be at a second end of the stack 30, and penetrates all of the stacked unit cells CU. The fuel distribution path 54 is coupled to the fuel bypass path 53 at the second end of the stack 30 (refer to FIG. 6), and also penetrates all of the stacked unit cells CU. In addition, the unreacted fuel discharging path 55 extends to the unreacted fuel outlet 52 from the second end of the stack 30, and penetrates all of the stacked unit cells CU.

Therefore, the fuel bypass path 53 transfers (e.g., bypasses) the fuel supplied from the fuel inlet 51 to be at the opposite end of the stack 30. The fuel distribution path 54 is coupled to the fuel bypass path 53 and distributes the fuel to the respective unit cells CU. The unreacted fuel discharging path 55 induces unreacted fuel from the respective unit cells CU to the unreacted fuel outlet 52, and provides structure to equalize the fuel flow lengths of the respective unit cells CU.

The stack 30, according to the first exemplary embodiment, is configured to supply oxidizing agent to the cathode-side separator 33 for a reaction with the fuel in the respective unit cells CU, and to form an oxidizing agent path for dissipating heat generated in the stack 30. Therefore, the stack 30 can simplify the structure of the system 100 because no additional cooling device for heat dissipation is required.

The oxidizing agent inlet 61 is coupled with the oxidizing agent supply 20 to supply oxidizing agent to the unit cells CU in the stack 30. The unreacted oxidizing agent outlet 62 is formed at a side of the stack opposite to that of the stack 30 where oxidizing agent inlet 61 is located and is configured to emit unreacted oxidizing agent from the unit cells CU in the stack 30. That is, the reaction cooling oxidizing agent path 63 is formed crossing the fuel bypass path 53 (i.e., the reaction cooling path is in a plane which is perpendicular to the plane of the fuel bypass and distribution), the fuel distribution path 54, and the unreacted fuel discharging path 55 that are formed parallel with each other.

In this case, the reaction cooling oxidizing agent path 63 extends to the unreacted oxidizing agent outlet 62 from the oxidizing agent inlet 61 to form an oxidizing agent path for heat dissipation while distributing the oxidizing agent for the reaction to the respective unit cells CU. Since the oxidizing agent flow lengths formed in each of the unit cells CU are equal to each other, the oxidizing agent supply amount of the respective unit cells CU is uniform.

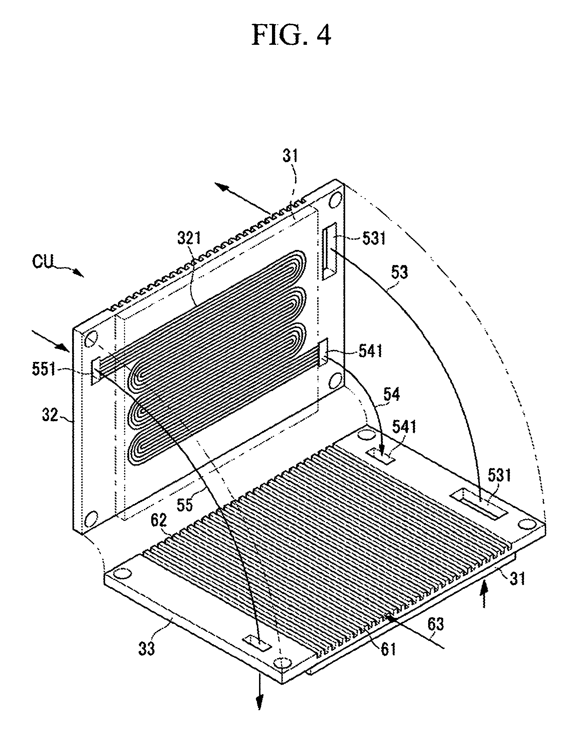

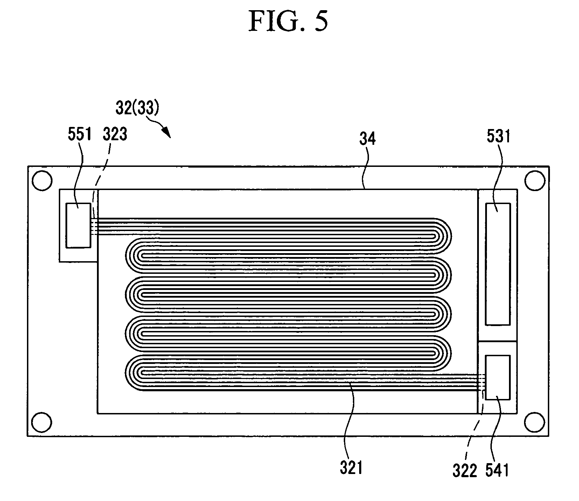

FIG. 4 is an exploded perspective view of the unit cells of a portion of the stack as shown in FIG. 2. FIG. 5 is a top plan view of a side of the separator of the unit cell, corresponding to the MEA as show in FIG. 4. FIG. 6 is an exploded perspective view of the end plate 44, the insulator 43, and the current collecting plate 42 in a portion of a stack as shown in FIG. 2.

Referring to FIG. 4 to FIG. 6, the fuel bypass path 53 is formed by a connection of fuel bypass holes 531 in the anode-side separator 32 and the cathode-side separator 33, corresponding to the outer portion of the MEA 31 (e.g., a portion of the separators that extends past the MEA.) The MEA 31 has a negligible thickness compared to the thickness of the anode-side and cathode-side separators 32 and 33. A gasket 34 (refer to FIG. 5) is disposed between the two separators 32 and 33 so that an air-tight structure is formed between the two separators 32 and 33 when the unit cells CU are formed and stacked.

The fuel distribution path 54 is formed by a connection of fuel supply holes 541 at the anode-side and cathode-side separators 32 and 33 corresponding to the outer portion of the MEA 31 (e.g., a portion of the separators that extends past the MEA.) The fuel supply holes 541 are coupled to one side of a fuel path 321 of the fuel distribution path 54 formed at the anode-side separator 32. A connector 322 (refer to FIG. 5) for the fuel supply holes 541 and the fuel path 321 is formed in a structure that maintains an airtight seal (or a hermetic seal) while crossing the gasket 34 line that air-tightly seals (or hermetically seals) the anode-side and cathode-side separators 32 and 33.

The fuel bypass path 53 and the fuel distribution path 54 are coupled to a first communication groove 71 (refer to FIG. 6) at the opposite side of the fuel inlet in order to transmit the fuel bypassed through the fuel bypass path 53 to the fuel distribution path 54. The first communication groove 71 may be formed in an end plate 44, an insulator 43, a current collecting plate 42, or separators 32 and 33 of the last unit cell CU disposed at the opposite end of the stack as the end of the stack where the fuel inlet is disposed. For convenience, the first communication groove 71 is shown formed in the end plate 44 according to the first exemplary embodiment, as shown in FIG. 6.

The reaction cooling oxidizing agent path 63 is formed in or at the cathode-side separator 33. The reaction cooling oxidizing agent path 63 is located adjacent to the MEA 31 on the opposite side of the MEA 31 as where the fuel path 321 is located. That is, in the unit cell CU, the anode-side separator 32 corresponds to the fuel path 321 at one side of the MEA 31, and the cathode-side separator 33 corresponds to the reaction cooling oxidizing agent path 63 at the other side of the MEA 31. Therefore, fuel supplied through the fuel path 321 may electrochemically react with oxidizing agent supplied through the reaction cooling oxidizing agent path 63 such that power and heat are generated.

The unreacted fuel discharging path 55 is formed by connection of fuel outlet holes 551 at the anode-side and cathode-side separators 32 and 33 corresponding to the outer portion of the MEA 31. The fuel outlet holes 551 are coupled to the opposite side of the fuel supply hole 541 of the fuel path 321 formed in the anode-side separator 32. A connector 323 (refer to FIG. 5) of the fuel outlet holes 551 and the fuel path 321 is formed in a structure that maintains an airtight seal (or a hermetic seal) while crossing the gasket 34 line that air-tightly seals (or hermetically seals) the anode-side and cathode-side separators 32 and 33.

In this case, the fuel bypass path 53 is further coupled to the fuel bypass holes 531 in the anode-side and cathode-side separators 32 and 33 through fuel bypass holes 421 and 431 coupled to the current collecting plate 42 and the insulator 43. In addition, the fuel distribution path 54 is further coupled to the fuel supply holes 541 in the anode-side and cathode-side separators 32 and 33 through fuel bypass holes 422 and 432 coupled to the current collecting plate 42 and the insulator 43.

Hereinafter, a second exemplary embodiment of the present invention will be described. For brevity, a description of parts that are similar to or the same as those of the first exemplary embodiment is not repeated. The system 100, according to the first exemplary embodiment, can equalize the fuel flow length of each of the unit cells CU while forming the fuel inlet 51 and the unreacted fuel outlet 52 in the same side of the stack 30.

An oxidizing agent path of a system 200, according to the second exemplary embodiment, differs from that of the preceding embodiment. In the second exemplary embodiment, the oxidizing agent inlet 261 and the unreacted oxidizing agent outlet 261 are formed at the same end of stack 230 to provide structure to equalize the oxidizing agent flow lengths of the respective unit cells CU.

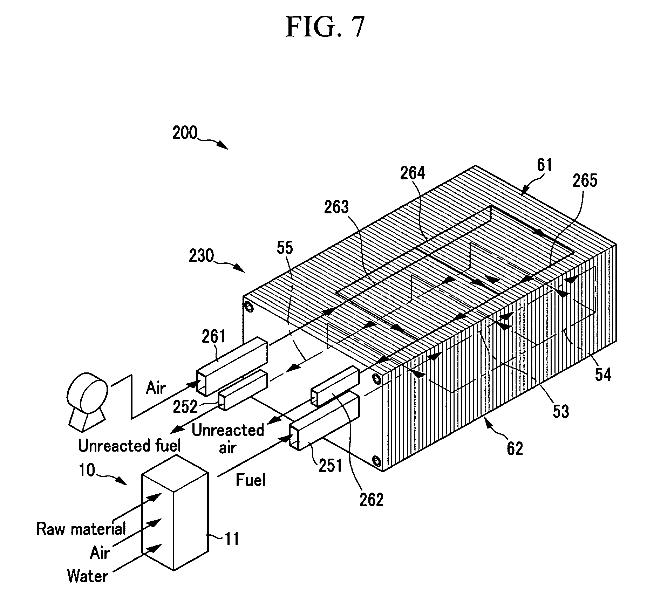

FIG. 7 is a schematic diagram of a fuel cell system according to the second exemplary embodiment of the present invention. In the second exemplary embodiment, a stack 230 includes a fuel inlet 251, an unreacted fuel outlet 252, an oxidizing agent inlet 261, and an unreacted oxidizing agent outlet 262, all formed on the same side of the stack.

The stack 230 may further include an oxidizing agent bypass path 263, an oxidizing agent distribution path 264, and an unreacted oxidizing agent discharging path 265 to form oxidizing agent paths in unit cells CU. The stack 230 may utilize the same or a similar fuel inlet 51, unreacted fuel outlet 52, fuel bypass path 53, fuel distribution path 54, and unreacted fuel discharging path 55 as in the first exemplary embodiment.

Additionally, the fuel path 321 of a second exemplary embodiment may be similar to the fuel path 321 described in the first exemplary embodiment. Furthermore, the oxidizing agent path 2331 of the second exemplary embodiment may also follow a design similar to that of the fuel path 321 of the first exemplary embodiment. For instance, the oxidizing agent inlet 261 may be coupled to an oxidizing agent supply 20 to take oxidizing agent into the stack 230, i.e., the unit cells (CU). The unreacted oxidizing agent outlet 262 may be coupled to the same end of the stack as which the oxidizing agent inlet 261 is coupled to, and may emit unreacted oxidizing agent from the stack 230, that is, from the unit cells CU. The oxidizing agent path and the fuel path can also be formed in the same direction.

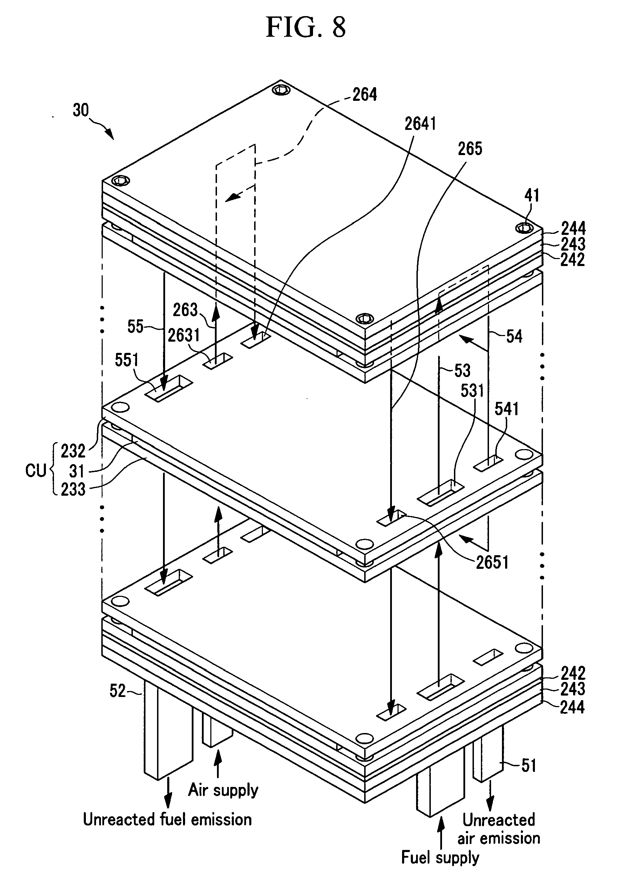

That is, the oxidizing agent inlet 261 and the unreacted oxidizing agent outlet 262 are coupled to end plates 244 provided at one end (e.g., a lower portion of the stack of FIG. 8) of the stack 230 to provide oxidizing agent to the unit cells CU and emit the unreacted oxidizing agent from the unit cells CU. Therefore, a simple pipe arrangement structure can be coupled to the stack 230.

Furthermore, the oxidizing agent bypass path 263, the oxidizing agent distribution path 264, and the unreacted oxidizing agent discharging path 265 can equalize oxidizing agent flow lengths respectively formed in the unit cells CU even though the oxidizing agent inlet 261 and the unreacted oxidizing agent outlet 262 are formed in the same end plate 244 of the stack 230, and thereby maintain a uniform oxidizing agent supply amount to each of the unit cells CU.

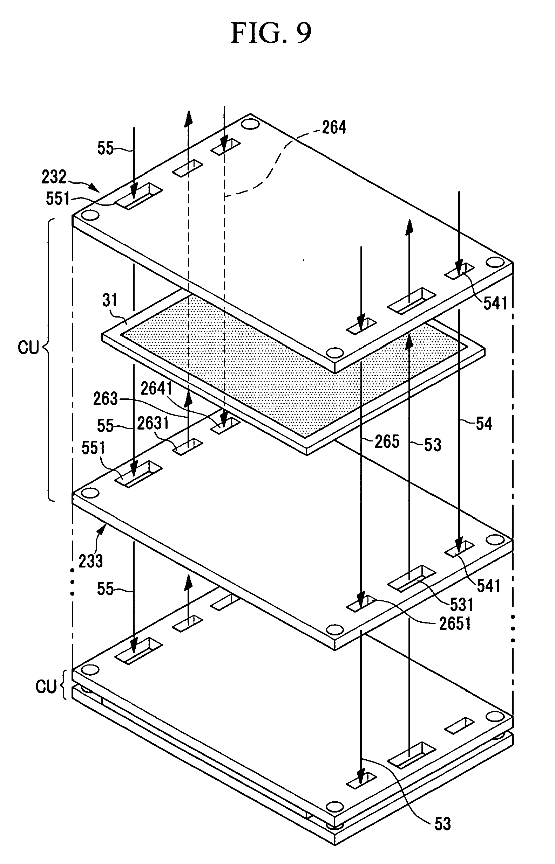

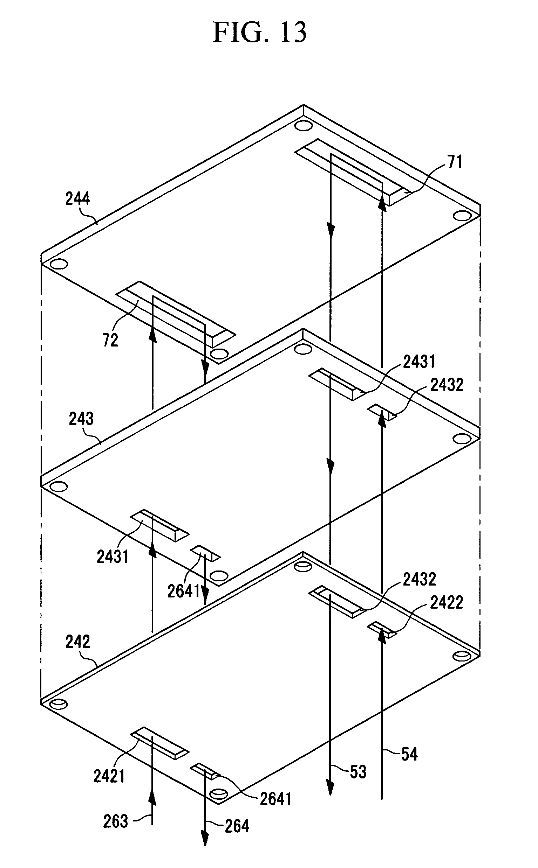

Referring back to FIG. 7 and FIG. 9, the oxidizing agent bypass path 263 extends from the oxidizing agent inlet 261 at one end of the stack 230 to the opposite end of the stack, and penetrates all the stacked unit cells CU. The oxidizing agent distribution path 264 is coupled to the oxidizing agent bypass path 263 in the communication groove 72 at the outermost unit cell of the stack (refer to FIG. 13) and extends across each of the stacked unit cells CU. In addition, the unreacted oxidizing agent discharging path 265 is coupled to the oxidizing agent distribution path 264 of each unit cell CU to the unreacted oxidizing agent outlet 262 to channel the unreacted oxidizing agent to the unreacted oxidizing agent outlet 262.

Therefore, the oxidizing agent bypass path 263 is configured to bypass oxidizing agent introduced from the oxidizing agent inlet 261 to the opposite end of the stack 230. The oxidizing agent distribution path 264 distributes oxidizing agent to the unit cells CU while heading back in the direction of the oxidizing agent inlet 261 from the opposite side thereof. The unreacted oxidizing agent discharging path 265 induces unreacted oxidizing agent to the unreacted oxidizing agent outlet 262 from the oxidizing agent distribution path across the cell units CU. Thus, the oxidizing agent flow lengths of the respective unit cells CU can be uniform.

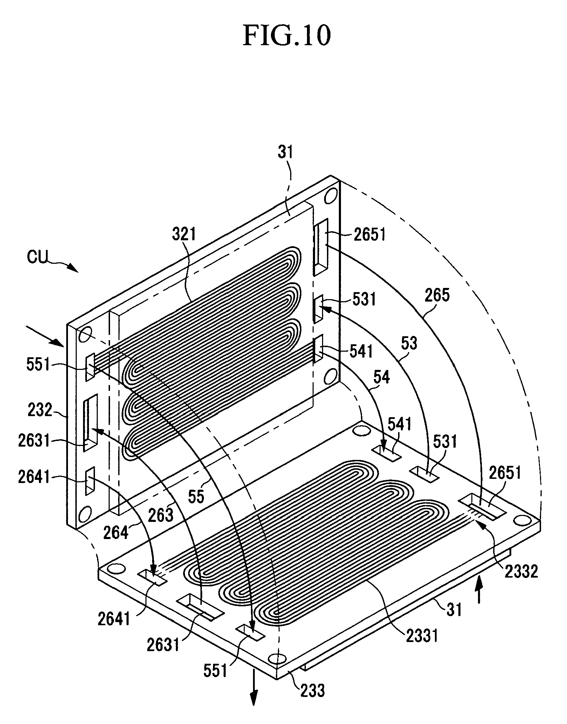

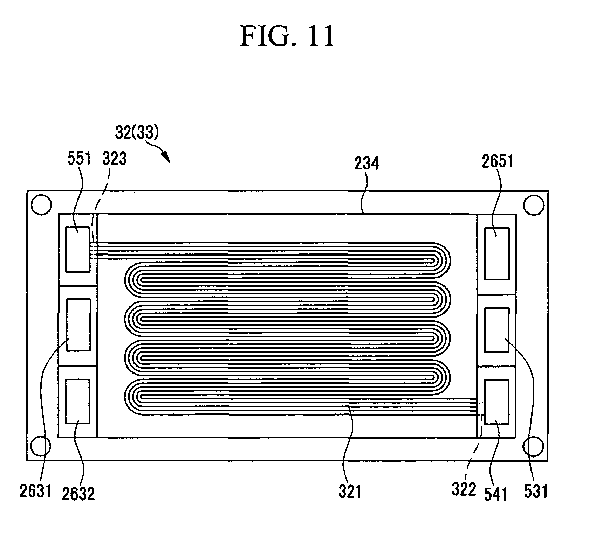

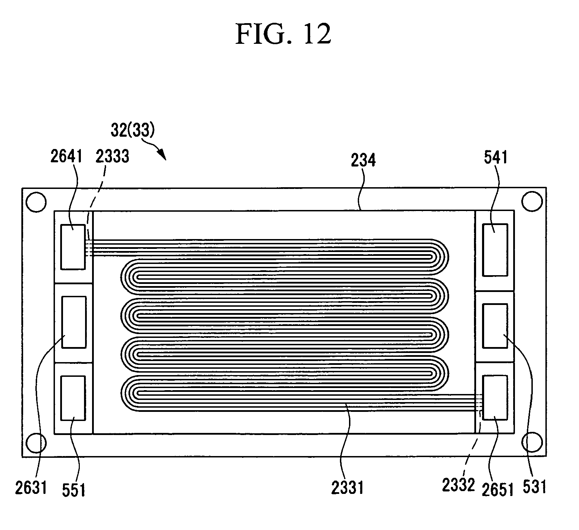

FIG. 10 is an exploded perspective view of the unit cells of a portion of the stack as shown in FIG. 8. FIG. 11 is a top plan view of a unit cell in the anode-side separator, corresponding to the MEA. FIG. 12 is a top plan view of a unit cell in the cathode-side separator, corresponding to the MEA. FIG. 13 is an exploded perspective view of an end plate, an insulator, and a current collecting plate of a portion of the stack as shown in FIG. 8.

Referring to FIG. 10 to FIG. 13, the oxidizing agent bypass path 263 is formed by a connection of oxidizing agent bypass holes 2631 formed in an anode-side separator 232 and a cathode-side separator 233 corresponding to the outer portion of the MEA 31 (e.g., a portion of the separators that extends past the MEA). The MEA 31 has a negligible thickness compared to the thickness of the anode-side and cathode-side separators 232 and 233. A gasket 234 (refer to FIG. 11 and FIG. 12) can be disposed between the two separators 232 and 233 such that an air-tight structure is formed between the two separators 232 and 233 when the unit cells CU are formed and stacked.

The oxidizing agent distribution path 264 is formed by a connection of oxidizing agent supply holes 2641 at the anode-side and cathode-side separators 232 and 233 corresponding to the outer portion of the MEA 31 (e.g., a portion of the separators that extends past the MEA). The oxidizing agent supply holes 2641 are coupled to one side of an oxidizing agent path 2331 in the cathode-side separator 233. A connector 2333 (refer to FIG. 12) for the oxidizing agent supply holes 2641 and the oxidizing agent path 2331 is formed in a structure that maintains an airtight seal (or a hermetic seal) while crossing the gasket 234 line that air-tightly seals (or hermetically seals) the anode-side and cathode-side separators 232 and 233.

With respect to FIG. 13, the oxidizing agent bypass path 263 and the oxidizing agent distribution path 264 are coupled to a second communication groove 72 at the opposite side of the oxidizing agent inlet in order to transmit the oxidizing agent bypassed through the oxidizing agent bypass path 263 to the oxidizing agent distribution path 264. The second communication groove 72 may be formed in an end plate 244, an insulator 243, a current collecting plate 242, or the separators 232 and 233 of the last unit cell CU. For convenience, the first and second communication grooves 71 and 72, according to the second exemplary embodiment, are shown as formed at the end plate 244.

The unreacted oxidizing agent discharging path 265 is formed by a connection of oxidizing agent outlet holes 2651 formed at the anode-side and cathode-side separators 232 and 233 corresponding to the outer portion of the MEA 31. The oxidizing agent outlet holes 2651 are coupled to an opposite side of the oxidizing agent supply hole 2641 of the oxidizing agent path 2331 formed in the cathode-side separator 233. Connectors 2332 and 2333 (refer to FIG. 12) of the oxidizing agent outlet holes 2651 and the oxidizing agent path 2331 are formed in a structure that maintains an airtight seal (or a hermetic seal) while crossing the gasket 234 line which provides an airtight seal (or a hermetic seal) for the anode-side and cathode-side separators 232 and 233.

In this case, the oxidizing agent bypass path 263 is further coupled to oxidizing agent bypass holes 2631 formed in the anode-side and cathode-side separators 232 and 233 through oxidizing agent bypass holes 2421 and 2431 coupled to the current collecting plate 242 and the insulator 243. In addition, the oxidizing agent distribution path 264 is further coupled to oxidizing agent supply holes 2641 formed in the anode-side and cathode-side separators 232 and 233 through the oxidizing agent bypass holes 2421 and 2431 coupled to the current collecting plate 242 and the insulator 243.

Connected holes (e.g. fuel or oxidizing agent bypass and fuel or oxidizing agent supply holes) may also be formed and connected in a portion of the separator corresponding to an outer portion of the MEA.

In the fuel cell of the invention, the fuel bypass path preferably extends at least from the fuel inlet, over the first unit cell of the stack until past the last unit cell of the stack in a direction perpendicular to the plane of the unit cells of the stack.

## Claims

1. A fuel cell system (100, 200) comprising:
a stack (30, 230) configured to generate power and heat through an electrochemical reaction of hydrogen and oxygen, the stack (30, 230) comprising:
a plurality of unit cells (CU) stacked together, each of the plurality of unit cells (CU) comprising separators and a membrane assembly (MEA) disposed between the separators;
a fuel inlet (51, 251) coupled to a first end of the stack (30, 230) and configured to introduce a fuel containing hydrogen to the unit cells (CU);
an unreacted fuel outlet (52, 252) coupled to the first end of the stack (30, 230) and configured to emit unreacted fuel from the unit cells (CU);
a fuel bypass path (53) coupled to the fuel inlet (51, 251), the fuel bypass path (53) configured to transfer the fuel from the first end of the stack (30, 230) to a second end of the stack (30, 230) and, thereby, to bypass the plurality of unit cells (CU);
a fuel distribution path (54) coupled to the fuel bypass path (53) at the second end of the stack (30, 230) and configured to distribute the fuel to the plurality of unit cells (CU); and
an unreacted fuel discharging path (55) coupled between the fuel distribution path (54) and the unreacted fuel outlet (52, 252), the unreacted fuel discharging path (55) configured to channel the unreacted fuel from the unit cells (CU) to the unreacted fuel outlet (52, 252).

2. The fuel cell system of claim 1, wherein the fuel bypass path comprises or is formed of a connection of fuel bypass holes in a portion of the separators that extends past the MEA.

3. The fuel cell system of claim 1 or 2, wherein the fuel distribution path comprises or is formed of a connection of fuel supply holes in a portion of the separators that extends past the MEA, and the fuel supply holes are coupled to a first side of fuel paths of the separators.

4. The fuel cell system of one of claims 1 to 3, wherein the unreacted fuel discharging path is formed by a connection of fuel outlet holes in the portion of the separators that extends past the MEA, and the fuel outlet holes are coupled to a second side of the fuel paths of the separators.

5. The fuel cell system of one of claims 1 to 4, wherein the fuel bypass path and the fuel distribution path are coupled together through a first communication groove formed at least one of an end plate, an insulator, a current collecting plate, and/or a separator of the unit cell of the plurality of unit cells being closest to the second end of the stack.

6. A fuel cell system of one of claims 1 to 5, comprising:
a fuel supply configured to supply a fuel containing hydrogen;
an oxidizing agent supply configured to supply oxidizing agent containing oxygen; and
a stack configured to generate power and heat through an electrochemical reaction of the hydrogen and the oxygen,
wherein the stack comprises:
a plurality of unit cells stacked together, and each unit cell of the plurality of unit cells comprises separators and a membrane assembly (MEA) disposed between the separators;
a fuel inlet coupled to the fuel supply at a first end of the stack, the fuel inlet configured to introduce the fuel to the plurality of the unit cells;
an unreacted fuel outlet at the first end of the stack, the unreacted fuel outlet configured to emit unreacted fuel from the stack;
a fuel bypass path coupled to the fuel inlet, the fuel bypass path configured to bypass the fuel from the first end of the stack to be at a second end of the stack being opposite to the first end;
a fuel distribution path coupled to the fuel bypass path at the second end of the stack and configured to distribute the fuel to the plurality of unit cells; and
an unreacted fuel discharging path coupled between the fuel distribution path and the unreacted fuel outlet, the unreacted fuel path configured to channel the unreacted fuel to the unreacted fuel outlet.

7. The fuel cell system of one of claims 1 to 6, wherein the stack further comprises:
an oxidizing agent inlet configured to introduce oxidizing agent to the plurality of unit cells from the oxidizing agent supply;
an unreacted oxidizing agent outlet located at a side of the stack opposite to a side of the stack where the oxidizing agent inlet is located; and
a reaction cooling oxidizing agent path extending between the oxidizing agent inlet and the unreacted oxidizing agent outlet, the reaction cooling oxidizing agent path formed in the crossing direction of the fuel bypass path and configured to distribute the unreacted oxidizing agent to the unit cells and form oxidizing agent paths for heat dissipation.

8. The fuel cell system of claim 7, wherein the reaction cooling oxidizing agent path is formed to extend in a direction crossing the extension direction of the fuel bypass path.

9. The fuel cell system of claim 7 or 8, wherein the reaction cooling oxidizing agent path is on a side of a corresponding separator of the separators opposite to a side of the corresponding separator disposed thereon by a fuel path.

10. The fuel cell system of one of claims 7 to 9, wherein, a first separator of the separators of each unit cell comprises a fuel path adjacent to one side of the MEA, and a second separator of the separators comprises the reaction cooling oxidizing agent path adjacent to another side of the MEA.

11. A fuel cell system of one of claims 1 to 6, comprising:
a fuel supply configured to supply a fuel containing hydrogen;
an oxidizing agent supply configured to supply oxidizing agent containing oxygen; and
a stack configured to generate power and heat through an electrochemical reaction of the hydrogen and the oxygen,
wherein the stack comprises:
a plurality of unit cells stacked together, and each of the plurality of unit cells comprises separators and a membrane assembly (MEA) disposed between the separators;
a fuel inlet coupled to the fuel supply, the fuel inlet configured to introduce the fuel to the plurality of unit cells;
an unreacted fuel outlet at the first end of the stack, the unreacted fuel outlet configured to emit unreacted fuel from the stack;
an oxidizing agent inlet coupled to the oxidizing agent supply, the oxidizing agent inlet configured to introduce the oxidizing agent from the oxidizing agent supply to the plurality of unit cells; and
an unreacted oxidizing agent outlet configured to emit unreacted oxidizing agent from the stack, wherein the fuel inlet, the unreacted fuel outlet, the oxidizing agent inlet, and the unreacted oxidizing agent outlet are formed at a first end of the stack;
a fuel bypass path coupled to the fuel inlet, the fuel bypass path configured to bypass the fuel from the first end of the stack to be at a second end of the stack;
a fuel distribution path coupled to the fuel bypass path at the second end of the stack, and configured to distribute the fuel to each of the plurality of unit cells; and
an unreacted fuel discharging path coupled between the fuel distribution path and the unreacted fuel outlet, the unreacted fuel discharging path configured to channel the unreacted fuel to the unreacted fuel outlet.

12. The fuel cell system of claim 11, wherein the stack further comprises:
an oxidizing agent bypass path coupled to the oxidizing agent inlet, the oxidizing agent bypass path configured to bypass the oxidizing agent from the first end of the stack to be at the second end of the stack;
an oxidizing agent distribution path coupled to the oxidizing agent bypass path at the second end of the stack, the oxidizing agent distribution path configured to distribute oxidizing agent to each of the plurality unit cells; and
an unreacted oxidizing agent discharging path coupled between the oxidizing agent distribution path and the unreacted oxidizing agent outlet, the unreacted oxidizing agent discharging path configured to channel the unreacted oxidizing agent to the unreacted oxidizing agent outlet.

13. The fuel cell system of claim 12, wherein the fuel bypass path comprises a connection of fuel bypass holes in portions of the separators that extend past the MEA, and the oxidizing agent bypass path comprises a connection of oxidizing agent bypass holes in portions of the separators that extend past the MEA.

14. The fuel cell system of claim 12, wherein the oxidizing agent distribution path is formed by a connection of oxidizing agent supply holes in a portion of the separators that extends past the MEA, and the oxidizing agent supply holes are coupled to a first side of oxidizing agent paths in the separators.

15. The fuel cell system of claim 14, wherein the unreacted oxidizing agent discharging path is formed by a connection of oxidizing agent outlet holes in the portion of the separators that extends past the MEA, and the oxidizing agent outlet holes are coupled to a second side of the oxidizing agent paths in the separators.

16. The fuel cell system of one of claims 12 to 15, wherein the oxidizing agent bypass path and the oxidizing agent distribution path are coupled together through a second communication groove formed in at least one of an end plate, an insulator, a current collecting plate, and a separator in an outermost unit cell of the plurality of unit cells at the second end of the stack.

## Patentansprüche

1. Brennstoffzellensystem (100, 200), aufweisend:
einen Stapel (30, 230), der zur Erzeugung von Energie und Wärme durch eine elektrochemische Reaktion von Wasserstoff und Sauerstoff konfiguriert ist, wobei der Stapel (30, 230) aufweist:
eine Vielzahl von Einheitszellen (CU), die aufeinander gestapelt sind, wobei jede aus der Vielzahl der Einheitszellen (CU) Separatoren und eine Membrananordnung (MEA), die zwischen den Separatoren angeordnet ist, aufweist;
einen Brennstoffeinlass (51, 251), der mit einem ersten Ende des Stapels (30, 230) gekoppelt ist und konfiguriert ist, einen Wasserstoff enthaltenden Brennstoff in die Einheitszellen (CU) einzuleiten;
einen Auslass (52, 252) für nicht zur Reaktion gebrachten Brennstoff, der mit dem ersten Ende des Stapels (30, 230) gekoppelt ist und konfiguriert ist, nicht zur Reaktion gebrachten Brennstoff aus den Einheitszellen (CU) auszulassen;
einen Brennstoff-Bypassweg (53), der mit dem Brennstoffeinlass (51, 251) gekoppelt ist, wobei der Brennstoff-Bypassweg (53) konfiguriert ist, den Brennstoff vom ersten Ende des Stapels (30, 230) zu einem zweiten Ende des Stapels (30, 230) weiterzuleiten und dadurch an der Vielzahl von Einheitszellen (CU) vorbeizuleiten;
einen Weg (54) zur Verteilung von Brennstoff, der am zweiten Ende des Stapels (30, 230) mit dem Brennstoff-Bypassweg (53) gekoppelt ist und konfiguriert ist, den Brennstoff an die Vielzahl der Einheitszellen (CU) zu verteilen; und
einen Weg (55) zur Ableitung von nicht zur Reaktion gebrachtem Brennstoff, der zwischen den Weg (54) zur Verteilung von Brennstoff und den Auslass (52, 252) für nicht zur Reaktion gebrachten Brennstoff gekoppelt ist, wobei der Weg (55) zur Ableitung von nicht zur Reaktion gebrachtem Brennstoff konfiguriert ist, den nicht zur Reaktion gebrachten Brennstoff von den Einheitszellen (CU) zum Auslass (52, 252) für den nicht zur Reaktion gebrachten Brennstoff zu leiten.

2. Brennstoffzellensystem nach Anspruch 1, wobei der Brennstoff Bypassweg eine Verbindung von Brennstoff-Bypasslöchern in einem Bereich der Separatoren aufweist, der über die MEA hinausragt, oder aus einer Verbindung von Brennstoff-Bypasslöchern in einem Bereich der Separatoren ausgebildet ist, der über die MEA hinausragt.

3. Brennstoffzellensystem nach Anspruch 1 oder 2, wobei der Weg zur Verteilung von Brennstoff eine Verbindung von Brennstoffzufuhrlöchern in einem Bereich der Separatoren aufweist, der über die MEA hinausragt, oder aus einer Verbindung von Brennstoffzufuhrlöchern in einem Bereich der Separatoren besteht, der über die MEA hinausragt, und wobei die Brennstoffzufuhrlöcher mit einer ersten Seite von Brennstoffwegen der Separatoren gekoppelt sind.

4. Brennstoffzellensystem nach einem der Ansprüche 1 bis 3, wobei der Weg zur Ableitung von nicht zur Reaktion gebrachtem Brennstoff durch eine Verbindung von Brennstoffauslasslöchern in dem Bereich der Separatoren ausgebildet ist, der über die MEA hinausragt, und wobei die Brennstoffauslasslöcher mit einer zweiten Seite der Brennstoffwege der Separatoren gekoppelt sind.

5. Brennstoffzellensystem nach einem der Ansprüche 1 bis 4, wobei der Brennstoff-Bypassweg und der Weg zur Verteilung von Brennstoff über eine erste Verbindungsnut miteinander gekoppelt sind, die in einer Endplatte und/oder einem Isolator und/oder einer Stromsammelplatte und/oder einem Separator der Einheitszelle aus der Vielzahl der Einheitszellen, die sich dem zweiten Ende des Stapels am nächsten befindet, ausgebildet ist.

6. Brennstoffzellensystem nach einem der Ansprüche 1 bis 5, aufweisend:
eine Brennstoffversorgung, die zur Zuführung eines Wasserstoff enthaltenden Brennstoffs konfiguriert ist;
ein Oxidationsmittelversorgung, die zur Zuführung eines Sauerstoff enthaltenden Oxidationsmittels konfiguriert ist; und
einen Stapel, der zur Erzeugung von Energie und Wärme durch eine elektrochemische Reaktion des Wasserstoffs und des Sauerstoffs konfiguriert ist,
wobei der Stapel aufweist:
eine Vielzahl von aufeinander gestapelten Einheitszellen, wobei jede Einheitszelle aus der Vielzahl der Einheitszellen Separatoren und eine Membrananordnung (MEA), die zwischen den Separatoren angeordnet ist, aufweist;
einen Brennstoffeinlass, der an einem ersten Ende des Stapels mit der Brennstoffversorgung gekoppelt ist, wobei der Brennstoffeinlass konfiguriert ist, den Brennstoff in die Vielzahl der Einheitszellen (CU) einzuleiten;
einen Auslass für nicht zur Reaktion gebrachten Brennstoff am ersten Ende des Stapels, wobei der Auslass für nicht zur Reaktion gebrachten Brennstoff konfiguriert ist, nicht zur Reaktion gebrachten Brennstoff aus dem Stapel auszulassen;
einen Brennstoff-Bypassweg, der mit dem Brennstoffeinlass gekoppelt ist, wobei der Brennstoff-Bypassweg konfiguriert ist, den Brennstoff vom ersten Ende des Stapels ausgehend derart vorbeizuleiten, dass er an ein zweites Ende des Stapels gelangt, das dem ersten Ende gegenüber liegt;
einen Weg zur Verteilung von Brennstoff, der am zweiten Ende des Stapels mit dem Brennstoff-Bypassweg gekoppelt ist und konfiguriert ist, den Brennstoff an die Vielzahl der Einheitszellen zu verteilen; und
einen Weg zur Ableitung von nicht zur Reaktion gebrachtem Brennstoff, der zwischen den Weg zur Verteilung von Brennstoff und den Auslass für nicht zur Reaktion gebrachten Brennstoff gekoppelt ist, wobei der Weg des nicht zur Reaktion gebrachten Brennstoffs konfiguriert ist, den nicht zur Reaktion gebrachten Brennstoff zum Auslass für nicht zur Reaktion gebrachten Brennstoff zu leiten.

7. Brennstoffzellensystem nach einem der Ansprüche 1 bis 6, wobei der Stapel weiterhin aufweist:
einen Oxidationsmitteleinlass, der konfiguriert ist, Oxidationsmittel von der Oxidationsmittelversorgung in die Vielzahl der Einheitszellen einzuleiten;
einen Auslass für nicht zur Reaktion gebrachtes Oxidationsmittel, der auf einer Seite des Stapels positioniert ist, die einer Seite des Stapels gegenüberliegt, auf der der Oxidationsmitteleinlas positioniert ist; und
einen Reaktionskühlungs-Oxidationsmittelweg, der zwischen dem Oxidationsmitteleinlass und dem Auslass für nicht zur Reaktion gebrachtes Oxidationsmittel verläuft, wobei der Reaktionskühlungs-Oxidationsmittelweg in der Kreuzungsrichtung des Brennstoff-Bypassweges ausgebildet ist und konfiguriert ist, das nicht zur Reaktion gebrachte Oxidationsmittel an die Einheitszellen zu verteilen und Oxidationsmittelwege zur Wärmeableitung auszubilden.

8. Brennstoffzellensystem nach Anspruch 7, wobei der Reaktionskühlungs-Oxidationsmittelweg derart ausgebildet ist, dass er in eine Richtung verläuft, die die Verlaufsrichtung des Brennstoff-Bypassweges kreuzt.

9. Brennstoffzellensystem nach Anspruch 7 oder 8, wobei der Reaktionskühlungs-Oxidationsmittelweg sich auf einer Seite eines korrespondierenden Separators der Separatoren gegenüber einer Seite des korrespondierenden Separators befindet, der durch einen Brennstoffweg darauf angeordnet ist.

10. Brennstoffzellensystem nach einem der Ansprüche 7 bis 9, wobei ein erster Separator der Separatoren jeder Einheitszelle einen Brennstoffweg aufweist, der benachbart zu einer Seite der MEA ist, und wobei ein zweiter Separator der Separatoren den Reaktionskühlungs-Oxidationsmittelweg aufweist, der benachbart zu einer anderen Seite der MEA ist.

11. Brennstoffzellensystem nach einem der Ansprüche 1 bis 6, aufweisend:
eine Brennstoffversorgung, die zur Zuführung eines Wasserstoff enthaltenden Brennstoffs konfiguriert ist;
eine Oxidationsmittelversorgung, die zur Zuführung eines Sauerstoff enthaltenden Oxidationsmittels konfiguriert ist, und
einen Stapel, der zur Erzeugung von Energie und Wärme durch eine elektrochemische Reaktion des Wasserstoffs und des Sauerstoffs konfiguriert ist,
wobei der Stapel aufweist:
eine Vielzahl von aufeinander gestapelten Einheitszellen, wobei jede aus der Vielzahl der Einheitszellen Separatoren und eine Membrananordnung (MEA), die zwischen den Separatoren angeordnet ist, aufweist;
einen Brennstoffeinlass, der mit der Brennstoffversorgung gekoppelt ist, wobei der Brennstoffeinlass konfiguriert ist, den Brennstoff in die Vielzahl der Einheitszellen einzuleiten;
einen Auslass für nicht zur Reaktion gebrachten Brennstoff am ersten Ende des Stapels, wobei der Auslass für nicht zur Reaktion gebrachten Brennstoff konfiguriert ist, nicht zur Reaktion gebrachten Brennstoff aus dem Stapel auszulassen;
einen Oxidationsmitteleinlass, der mit der Oxidationsmittelversorgung gekoppelt ist, wobei der Oxidationsmitteleinlass konfiguriert ist, das Oxidationsmittel von der Oxidationsmittelversorgung in die Vielzahl der Einheitszellen einzuleiten; und
einen Auslass für nicht zur Reaktion gebrachtes Oxidationsmittel, der konfiguriert ist, nicht zur Reaktion gebrachtes Oxidationsmittel aus dem Stapel auszulassen, wobei der Brennstoffeinlass, der Auslass für nicht zur Reaktion gebrachten Brennstoff, der Oxidationsmitteleinlass und der Auslass für nicht zur Reaktion gebrachtes Oxidationsmittel an einem ersten Ende des Stapels ausgebildet sind;
einen Brennstoff-Bypassweg, der mit dem Brennstoffeinlass gekoppelt ist, wobei der Brennstoff-Bypassweg konfiguriert ist, den Brennstoff vom ersten Ende des Stapels ausgehend derart vorbeizuleiten, dass er an ein zweites Ende des Stapels gelangt;
einen Weg zur Verteilung von Brennstoff, der am zweiten Ende des Stapels mit dem Brennstoff-Bypassweg gekoppelt ist und konfiguriert ist, den Brennstoff an jede aus der Vielzahl der Einheitszellen zu verteilen; und
einen Weg zur Ableitung von nicht zur Reaktion gebrachtem Brennstoff, der zwischen den Weg zur Verteilung von Brennstoff und den Auslass für nicht zur Reaktion gebrachten Brennstoff gekoppelt ist, wobei der Weg zur Ableitung von nicht zur Reaktion gebrachtem Brennstoff konfiguriert ist, den nicht zur Reaktion gebrachten Brennstoff zum Auslass für nicht zur Reaktion gebrachten Brennstoff zu leiten.

12. Brennstoffzellensystem nach Anspruch 11, wobei der Stapel weiterhin aufweist:
einen Oxidationsmittel-Bypassweg, der mit dem Oxidationsmitteleinlass gekoppelt ist, wobei der Oxidationsmittel-Bypassweg konfiguriert ist, das Oxidationsmittel vom ersten Ende des Stapels ausgehend derart vorbeizuleiten, dass es an das zweite Ende des Stapels gelangt;
einen Weg zur Verteilung von Oxidationsmittel, der am zweiten Ende des Stapels mit dem Oxidationsmittel-Bypassweg gekoppelt ist, wobei der Weg zur Verteilung von Oxidationsmittel konfiguriert ist, das Oxidationsmittel an jede aus der Vielzahl der Einheitszellen zu verteilen; und
einen Weg zur Ableitung von nicht zur Reaktion gebrachtem Oxidationsmittel, der zwischen den Weg zur Verteilung von Oxidationsmittel und den Auslass für nicht zur Reaktion gebrachtes Oxidationsmittel gekoppelt ist, wobei der Weg zur Ableitung von nicht zur Reaktion gebrachtem Oxidationsmittel konfiguriert ist, das nicht zur Reaktion gebrachte Oxidationsmittel zum Auslass für nicht zur Reaktion gebrachtes Oxidationsmittel zu leiten.

13. Brennstoffzellensystem nach Anspruch 12, wobei der Brennstoff-Bypassweg eine Verbindung von Brennstoff-Bypasslöchern in Bereichen der Separatoren aufweist, die über die MEA hinausragen, und wobei der Oxidationsmittel-Bypassweg eine Verbindung von Oxidationsmittel-Bypasslöchern in Bereichen der Separatoren aufweist, die über die MEA hinausragen.

14. Brennstoffzellensystem nach Anspruch 12, wobei der Weg zur Verteilung von Oxidationsmittel durch eine Verbindung von Oxidationsmittelzufuhrlöchern in einem Bereich der Separatoren ausgebildet ist, der über die MEA hinausragt, und wobei die Oxidationsmittelzufuhrlöcher mit einer ersten Seite der Oxidationsmittelwege in den Separatoren gekoppelt sind.

15. Brennstoffzellensystem nach Anspruch 14, wobei der Weg zur Ableitung von nicht zur Reaktion gebrachtem Oxidationsmittel durch eine Verbindung von Oxidationsmittelauslasslöchern in dem Bereich der Separatoren ausgebildet ist, der über die MEA hinausragt, und wobei die Oxidationsmittelauslasslöcher mit einer zweiten Seite der Oxidationsmittelwege in den Separatoren gekoppelt sind.

16. Brennstoffzellensystem nach einem der Ansprüche 12 bis 15, wobei der Oxidationsmittel-Bypassweg und der Weg zur Verteilung von Oxidationsmittel über eine zweite Verbindungsnut miteinander gekoppelt sind, die in einer Endplatte und/oder einem Isolator und/oder einer Stromsammelplatte und/oder einem Separator in einer äußersten Einheitszelle aus der Vielzahl der Einheitszellen am zweiten Ende des Stapels ausgebildet ist.

## Revendications

1. Système de pile à combustible (100, 200), comprenant :
un empilement (30, 230) configuré pour engendrer de la puissance et de la chaleur par une réaction électrochimique d'hydrogène et d'oxygène, l'empilement (30, 230) comprenant :
une pluralité de cellules unitaires (CU) empilées les unes sur les autres, chacune de la pluralité de cellules unitaire (CU) comprenant des séparateurs et un assemblage de membranes (MEA) disposé entre les séparateurs ;
un conduit d'admission de combustible (51, 251) couplé à une première extrémité de l'empilement (230) et configuré pour introduire un combustible contenant de l'hydrogène dans les cellules unitaires (CU) ;
un conduit de sortie de combustible n'ayant pas réagi (52, 252) couplé à la première extrémité de l'empilement (30, 230) et configuré pour émettre le combustible n' ayant pas réagir hors des cellules unitaires (CU) ;
un trajet de dérivation de combustible (53) couplé au conduit d'admission du combustible (51, 251), le trajet de dérivation de combustion (53) étant configuré pour transférer le combustible de la première extrémité de l'empilement (30, 230) à une seconde extrémité de l'empilement (30, 230) et, ainsi, à éviter la pluralité de cellules unitaires (CU) ;
un trajet de distribution de combustible (54) couplé au trajet de dérivation de combustible (53) à la seconde extrémité de l'empilement (30, 230) et configuré pour distribuer le combustible à la pluralité de cellules unitaires (CU) ;
un trajet de déchargement de combustible n'ayant pas réagi (55) couplé entre le trajet de distribution de combustible (54) et le conduit de sortie du combustible n'ayant pas réagi (52, 252), le trajet de déchargement de combustible n'ayant pas réagi (55) étant configuré pour canaliser le combustible n'ayant pas réagi des cellules unitaires (CU) au conduit de sortie de combustible n'ayant pas réagi (52, 252).

2. Système de pile à combustible suivant la revendication 1, dans lequel le trajet de dérivation de combustible comprend une ou est formé d'une connexion de trous de dérivation de combustible dans une partie des séparateurs qui s'étend au-delà du MEA.

3. Système de pile à combustible suivant la revendication 1 ou 2, dans lequel le trajet de distribution de combustible comprend une ou est formée d'une connexion de trous d'alimentation en combustible dans une partie des séparateurs qui s'étend au-delà du MEA, et les trous d'alimentation en combustible sont couplés à un premier côté des trajets de combustible des séparateurs.

4. Système de pile à combustible suivant une des revendications 1 à 3, dans lequel le trajet de déchargement de combustible n'ayant pas réagi est formé par une connexion de trous de sortie de combustible dans la partie des séparateurs qui s'étend au-delà du MEA, et les trous de sortie de combustible sont couplés à un second côté des trajets de combustible et des séparateurs.

5. Système de pile à combustible suivant une des revendications 1 à 4, dans lequel le trajet de dérivation de combustible et le trajet de dérivation de combustible sont couplés l'un à l'autre par une première rainure de communication formée dans au moins un des composants consistant en une plaque terminale, un isolant, une plaque collectrice de courant et/ou un séparateur dans les cellules unitaires de la pluralité de cellules unitaires la plus proche de la seconde extrémité de l'empilement.

6. Système de pile à combustible suivant une des revendications 1 à 5, comprenant : une source de combustible configurée pour fournir un combustible contenant de l'hydrogène ;
une source d'agent oxydant configurée pour fournir un agent oxydant contenant de l'oxygène ;
un empilement configuré pou engendrer de la puissance et de la chaleur par une réaction électrochimique de l'hydrogène et de l'oxygène,
dans lequel l'empilement comprend :
une pluralité de cellules unitaires empilées les unes sur les autres, chaque cellule unitaire de la pluralité de cellules unitaires comprenant des séparateurs et un assemblage de membranes (MEA) disposé entre les séparateurs ;
un conduit d'admission de combustible couplé à la source de combustible d'une première extrémité de l'empilement, le conduit d'admission de combustible étant configuré pour introduire le combustible dans la pluralité de cellules unitaires ;
un conduit de sortie de combustible n'ayant pas réagi à la première extrémité de l'empilement, le conduit de sortie du combustible n'ayant pas réagi étant configuré pour émettre le combustible n'ayant pas réagi hors de l'empilement ;
un trajet de dérivation de combustible couplé au conduit d'admission de combustible, le trajet de dérivation de combustible étant configuré pour dévier le combustible à partie de la première extrémité de l'empilement de manière à se trouver à une seconde extrémité de l'empilement opposée à la première extrémité ;
un trajet de distribution de combustible couplé au trajet de dérivation de combustible à la seconde extrémité de l'empilement et configuré pour distribuer le combustible à la pluralité de cellules unitaires ; et
un trajet de déchargement de combustible n'ayant pas réagi couplé entre le trajet de distribution de combustible et le conduit de sortie de combustible n'ayant pas réagi, le trajet de combustible n'ayant pas réagi étant configuré pou canaliser le combustible n'ayant pas réagi au conduit de sortie de combustible n'ayant pas réagi.

7. Système de pile à combustible suivant une des revendications 1 à 6, dans lequel l'empilement comprend en outré :
un conduit d'admission d'agent oxydant configuré pour introduire un agent oxydant dans la pluralité de cellules unitaires à partir de la source d'agent oxydant ;
un conduit de sortie d'agent oxydant n'ayant pas réagi situé d'un coté de l'empilement opposé à un côté de l'empilement où le conduit d'admission d'agent oxydant est situé ; et
un trajet d'agent oxydant pour refroidissement de la réaction s'étendant entre le conduit d'admission d'agent oxydant et le conduit de sortie d'agent oxydant n'ayant pas réagi, le trajet d'agent oxydant pour refroidissement de la réaction étant formé dans la direction transversale du trajet de dérivation de combustible et étant configuré pour distribuer l'agent oxydant n'ayant pas réagi aux cellules unitaires et formé des trajets d'agent oxydant pour la dissipation de la chaleur.

8. Système de pile à combustible suivant la revendication 7, dans lequel le trajet d'agent oxydant pour refroidissement de la réaction est formé de manière à s'étendre dans une direction coupant la direction d'extension du trajet de dérivation de combustible.

9. Système de pile à combustible suivant la revendication 7 ou 8, dans lequel le trajet d'agent oxydant pour refroidissement de la réaction est situé sur un côté de séparateur correspondant des séparateurs opposé à un côté du séparateur correspondant disposé sur celui-ci par un trajet de combustible.

10. Système de pile à combustible suivant une des revendications 7 à 9, dans lequel un premier séparateur des séparateurs de chaque cellule unitaire comprend un trajet de combustible adjacent à un côté du MEA, un second séparateur des séparateurs comprend le trajet d'agent oxydant pour refroidissement de la réaction adjacent à un autre côté du MEA.

11. Système de pile à combustible suivant une des revendications 1 à 6, comprenant :
une source de combustible configurée pour fournir un combustible contenant de l'oxygène ;
une source d'agent oxydant configurée pour fournir un agent oxydant contenant de l'oxygène, et
un empilement configuré pour engendrer de la puissance et de la chaleur par une réaction électrochimique de l'hydrogène et de l'oxygène,
dans lequel l'empilement comprend :
une pluralité de cellules unitaires empilées les unes sur les autres, chacune de la pluralité de cellules unitaires comprenant des séparateurs et un assemblage de membranes (MEA) disposé entre les séparateurs ;
un conduit d'admission de combustible couplé à la source de combustible, le conduit d'admission de combustible étant configuré pour introduire le combustible dans la pluralité de cellules unitaires ;
un conduit de sortie de combustible n'ayant pas réagi à la première extrémité de l'empilement, le conduit de sortie du combustible n'ayant pas réagi étant configuré pour émettre le combustible n'ayant pas réagi hors de l'empilement ;
un conduit d'admission d'agent oxydant couplé à la source d'agent oxydant, le conduit d'admission d'agent oxydant étant configuré pour introduire l'agent oxydant à partir de la source d'agent oxydant à la pluralité de cellules unitaires ; et
un conduit de sortie d'agent oxydant n'ayant pas réagi configuré pour émettre l'agent oxydant n'ayant pas réagi hors de l'empilement, le conduit d'admission du combustible, le conduit de sortie de combustible n'ayant pas réagi, le conduit d'admission d'agent oxydant et le conduit de sortie d'agent oxydant n'ayant pas réagi étant formés à une première extrémité de l'empilement ;
un trajet de dérivation de combustible couplé au conduit d'administration de combustible, le trajet de dérivation de combustible étant configuré pour dévier le combustible à partir de la première extrémité de l'empilement de telle sorte qu'il soit situé à une seconde extrémité de l'empilement ;
un trajet de distribution de combustible couplé au trajet de dérivation du combustible à la seconde extrémité de l'empilement, et configuré pour distribuer le combustible à chacune de la pluralité de cellules unitaires ; et
un trajet de déchargement de combustible n'ayant pas réagi couplé entre le trajet de distribution de combustible et le conduit de sortie de combustible n'ayant pas réagi, le trajet de déchargement de combustible n'ayant pas réagi étant configuré pour canaliser le combustible n'ayant pas réagi au conduit de sortie de combustible n'ayant pas réagi.

12. Système de pile à combustible suivant la revendication 11, dans lequel l'empilement comprend en outre :
un trajet de dérivation d'agent oxydant couplé au conduit d'admission d'agent oxydant, le trajet de dérivation d'agent oxydant étant configuré pour dévier l'agent oxydant à partir de la première extrémité de l'empilement de telle sorte qu'il soit situé à la seconde extrémité de l'empilement ;
un trajet de distribution d'agent oxydant couplé au trajet de dérivation d'agent oxydant à la seconde extrémité de l'empilement, le trajet de distribution d'agent oydant étant configuré pour distribuer l'agent oxydant à chacune de la pluralité de cellules unitaire ; et
un trajet de déchargement d'agent oxydant n'ayant pas réagi couplé entre le trajet de distribution d'agent oxydant et le conduit de sortie d'agent oxydant n'ayant pas réagi, le trajet de déchargement d'agent oxydant n'ayant pas réagi étant configuré pour canaliser l'agent oxydant n'ayant pas réagi au conduit de sortie d'agent oxydant n'ayant pas réagi.

13. Système de pile à combustible suivant la revendication 12, dans lequel le trajet de dérivation de combustible comprend une connexion de trous de dérivation de combustible dans des parties des séparateurs qui s'étendent au-delà du MEA, et le trajet de dérivation d'agent oxydant comprend une connexion de trous de dérivation d'agent oxydant dans des parties des séparateurs qui s'étendent au-delà du MEA.

14. Système de pile à combustible suivant la revendication 12, dans lequel le trajet de distribution d'agent oxydant est formé par une connexion de trous de distribution d'agent oxydant dans une partie des séparateurs qui s'étend au-delà du MEA, et les trous de distribution d'agent oxydant sont couplés à un premier côté de trajets d'agent oxydant dans les séparateurs.

15. Système de pile à combustible suivant la revendication 14, dans lequel le trajet de déchargement d'agent oxydant n'ayant pas réagi est formé par une connexion de trous de sortie d'agent oxydant dans la partie des séparateurs qui s'étend au-delà du MEA, et les trous de sortie d'agent oxydant sont couplés à un second côté des trajets d'agent oxydant dans les séparateurs.

16. Système de pile à combustible suivant les revendications 12 à 15, dans lequel le trajet de dérivation d'agent oxydant et le trajet de distribution d'agent oxydant sont couplés l'un à l'autre par une seconde rainure de communication formée dans au moins un des composants consistant en une plaque terminale, un isolant, une plaque collectrice de courant et un séparateur dans une cellule unitaire la plus à l'extérieur de la pluralité de cellules unitaires à la seconde extrémité de l'empilement.
